# EUROPÄISCHE PATENTANMELDUNG

(11) **EP 2 647 609 A2**
(43) Veröffentlichungstag der Anmeldung: **09.10.2013**
(21) Anmeldenummer: 13157919.5
(22) Anmeldetag: 06.03.2013
(51) Int. Cl.: C04B 24/14, C04B 103/30

(54) **Glutaminreiche Peptide als Luftporenbildner in Baustoffmassen**

(30) Priorität: 02.04.2012 DE 102012205372
(71) Anmelder: Evonik Industries AG, 45128 Essen (DE)
(72) Erfinder: Schilling, Martin, 53115 Bonn (DE); Toelle, Christoph, 47167 Duisburg (DE); Scheuermann, Ralph, 45359 Essen (DE); Giessler-Blank, Sabine, 44227 Dortmund (DE); Heißing, Jörn, 45329 Essen (DE)

(57) **Zusammenfassung**

Die Erfindung betrifft die Verwendung von Hydrolysaten glutaminreicher Proteine zur Verwendung als Luftporenbildner in Baustoffmassen.

## Beschreibung

### Gebiet der Erfindung

Die Erfindung betrifft Additive für Baustoffmischungen, welche den Luftanteil dieser Baustoffmischungen beeinflussen.

### Stand der Technik

Baustoffmischungen, insbesondere Beton- und Mörtelmischungen werden häufig mit Additiven beaufschlagt, um Einfluß auf den Luftgehalt der Mischung sowie die Verteilung der Luftporen zu nehmen. Diese in der Regel kugelförmigen Luftporen, deren Durchmesser in der Größenordnung von 1 µm bis 1 mm liegt, werden beim Anmachen des Zements gezielt in die Baustoffmischung eingeführt, um den Frost-Tau-Widerstand von Zementstein wie beispielsweise Fahrbahndecken aus Beton zu erhöhen. Ein weiteres Anwendungsgebiet für Luftporenbildner sind Putze. Hierbei stehen sowohl die isolierende sowie die gewichtsreduzierende Eigenschaft der Luftblasen im Vordergrund. Letztere ist für viele weitere Anwendungen relevant, bei denen das Gewicht eine Rolle spielt wie z.B. Schaumbeton oder Gipskartonplatten oder als Füllmaterial für Erd- und Tiefbau.

Der Eintrag von Luft bzw. Luftblasen kann entweder durch Einbringen von Scherenergie beim Mischen erfolgen oder im Fall von Schaumbeton durch Additive, die selber Gas freisetzen wie z. B. Aluminiumpartikel, die in alkalischer wäßriger Umgebung Wasserstoff freisetzen. Die resultierenden Luft- bzw. Gasblasen müssen durch grenzflächenaktive Additive stabilisiert werden, um einen Luftaustrag im weiteren Verlauf der Verarbeitung zu verhindern. Diese Additive, die als Luftporenbilder bezeichnet werden, sind im Stand der Technik beschrieben und basieren meist auf organischen Wurzelharzen, respektive den entsprechenden Seifen oder auf synthetischen Tensiden. In der Regel sind diese flüssig und werden der Baustoffmischung meist in wässriger Lösung beim Anrühren zugesetzt. Nachteilig bei der Verwendung von flüssigen Produkten ist, dass diese nicht ohne weiteres in Trockenmörtelmischungen vorgemischt werden können, ohne dass ein energie- und somit zeit- und kostenaufwendiger Prozess wie Sprühtrocknen, Verkapseln etc. zum Überführen in ein feste Form vorgeschaltet wird.

Aber auch in Anwendungen, in denen flüssige Luftporenbildner zum Einsatz kommen können, wie z. B. in Betonen, besteht der Bedarf nach kostengünstigen und umweltverträglichen Produkten.

Tierische, pflanzliche und mikrobielle Proteine werden als Rohstoffe für eine Vielzahl von technischen Anwendungen genutzt. In vielen Fällen werden durch saure, alkalische oder enzymatische Hydrolyse zu niedermolekulareren Peptidmischungen die fuktionellen und Verarbeitungs-Eigenschaften der Produkte verbessert. Sowohl Proteine als Peptide sind säureamid-artig verknüpfte Kondensationsprodukte aus Aminosäuren die anhand ihres Molekulargewichts unterschieden werden. Obwohl die Grenze nicht genau definiert ist, bezeichnet man Polypeptide mit unter 100 Aminosäuren meistens als Peptide (Römpp Chemielexikon, Georg Thieme Verlag, 2011). Die bei der Hydrolyse entstehenden Polymere werden ebenfalls meistens als Peptide bezeichnet. Im Gegensatz zur selektiven enzymatischen Hydrolyse der Peptidbindungen durch Proteasen, die meist unter milden Reaktionsbedingungen erfolgt, benötigt die saure oder alkalische Hydrolyse der Peptidbindung drastische Bedingungen. Bei hoher Temperatur und extremen pH Werten laufen eine Reihe von Nebenreaktionen ab, unter anderem auch die Hydrolyse der Amidfunktionen der Glutamin- und Asparaginreste, wobei Glutaminsäure- und Asparaginsäurereste freigesetzt werden.

Zur Beschreibung der Hydrolysate wird häufig der Hydrolysegrad des Proteins herangezogen. Dieser ist definiert als die Anzahl der durch die Hydrolyse der Peptidbindungen freigesetzten Aminogruppen, bezogen auf die bei der Kompletthydrolyse (zu Aminosäuren) freisetzbaren Aminogruppen und wird als prozentualer Wert angegeben (vgl. Nielsen, P.M. et al. 2001, Journal of Food Science, Vol. 66, No. 5). Verschiedene Derivatisierungsmethoden zur photometrischen Detektion der Aminogruppen sind hierfür beschrieben. Ein Beispiel ist die Derivatisierung mit ortho-Phthalaldehyd und anschließende Detektion bei einer Wellenlänge von 340 nm.

Aus der Literatur ist bekannt, dass pflanzliche, tierische und mikrobielle Proteine und daraus hergestellte Hydrolysate und Derivate die Luftporenbildung von Mörtel positiv beeinflussen können (Plank et al. 2004). Beispielsweise beschreibt JP2000226245A den Einsatz von enzymatisch hydrolysiertem Sojaprotein als Luftporenbildner in Zementzusammensetzungen. Auch in PL160970 wird der Einsatz von Proteinhydrolysaten als Luftporenbildner beschrieben. Neben enzymatischen Hydrolysaten sind auch durch Säure- bzw. Baseeinwirkung hergestellte Hydrolysate für diesen Zweck beschrieben. GB2251857A beschreibt beispielsweise den Einsatz von alkalisch hydrolysierten Sojaproteinen, Horn- und Hufproteinen, Ochsenblutproteinen usw..

Als Gluten (synonym Weizenkleber, Weizenprotein) wird die praktisch wasserunlösliche, viskoelastische Proteinfraktion bezeichnet, die man nach dem Auswaschen eines Weizenmehls/Weizenmehlteigs mit Wasser erhält. Es fällt unter anderem bei der Stärkegewinnung aus Weizen als Nebenprodukt an. Bei den im Weizenmehl vorhandenen Proteinen handelt es sich um sehr komplexe Gemische. Die Charakterisierung der Weizenmehlproteine anhand ihrer Löslichkeit wurde 1907 von T.B. Osborne zum ersten Mal durchgeführt. Die vier erhaltenen Fraktionen werden deshalb als Osborne Fraktionen bezeichnet. Hierzu gehören die wasserlöslichen Weizenproteinfraktionen, die Albumine und Globuline, sowie die nicht-wasserlöslichen Prolamine (Gliadin) und Gluteline (Glutenin) (Belitz, H.-D. und Grosch, W. 1999). Eine analoge Einteilung erfolgt auch für die Speicherproteine anderer Getreidearten.

Der Einsatz von Gluten selbst als Luftporenbildner ist bekannt. JP52043814A beschreibt die Verwendung von Weizengluten zur Luftporenbildung in Kombination mit verschiedenen Zementen. Neben Casein und einem weiteren Protein, wurde der Einsatz von Gluten aus Weizenmehl zur Luftporenbildung in Mörtel von Chandra, S. et al. beschrieben (Influence of proteins on some properties of portland cement mortar, International Journal of Cement Composites and Lightweight Concrete, 9 (2), 91-94, 1987). Weiterhin beschreibt EP0181849B1 den Einsatz von Weizengluten als Luftporenbildner.

Weiterhin können Kondensate von Fettsäurechloriden und Proteinen bzw. Proteinhydrolysaten, die bekanntermaßen tensidische Eigenschaften aufweisen, als Luftporenbildner in Baustoffen eingesetzt werden. Ein Beispiel von auf diese Weise modifiziertem Kollagen und dessen Hydrolysaten beschreibt FR2680781.

So ist beispielsweise aus der deutschen Anmeldung DE19751512A die Verwendung von Proteinkonzentraten pflanzlichen Ursprungs als Zusatzkomponente in zementbasierten Klebemörteln bekannt. Insbesondere die hier verwendeten Leguminosenproteine sollen die Abbindung und Verbundhaftung zwischen einer festen Untergrundmasse als Trägersubstrat und den darauf mit Hilfe des Klebemörtels befestigten keramischen oder mineralischen Belagwerkstoffes intensivieren bzw. störende Einflüsse kompensieren. Bei den verwendeten Proteinkonzentraten handelt es sich um feinteilige Samenproteine (Sojaproteine) in Trockenform, die aus den Samen durch bekannte Arbeitsschritte wie Schälen, Walzen oder eine Ölextraktion erhalten werden.

Aufgabe der vorliegenden Erfindung ist folglich die Bereitstellung kostengünstiger Peptide als Luftporenbildner in hydraulisch härtbaren Baustoffmassen.

### Beschreibung der Erfindung:

Überraschenderweise wurde gefunden, dass Peptide bzw. Peptidgemische mit einem hohen Glutamingehalt in der Lage sind große Luftmengen in hydraulisch härtbaren Baustoffen dispergiert zu halten.

Luftmengen in hydraulisch härtbaren Baustoffen dispergiert zu halten bedeutet, dass die in die Baustoffmasse eingebrachte Luft der Masse nicht wieder entweicht. Bevorzugt entweicht die Luft nicht bis zum sogenannten Anziehen der Masse, worunter ein Anstieg der Viskosität der Masse verstanden wird.

Bevorzugt verbleibt die Luft bis zum Erstarren in der Baustoffmasse. Unter Erstarrung wird verstanden, dass es nicht möglich ist die Baustoffmasse ohne Rissbildung zu Verformen. Besonders bevorzugt wird unter Erstarrung der Zustand vollständiger Aushärtung verstanden. Die vollständige Aushärtung bezieht sich auf die dem ausgehärteten Baustoff jeweils zugesicherten statischen Eigenschaften, wie z.B. Bruchfestigkeit.

Gegenstand der vorliegenden Erfindung ist die Verwendung von Peptiden bzw. Peptidgemischen mit mindestens 16 Gew. % Glutamin, bevorzugt mindestens 20 Gew. %, mehr bevorzugt mindestens 25 Gew. %, weiter bevorzugt mindestens 30 Gew. %, insbesondere bevorzugt mindestens 35 Gew. % Glutamin, bezogen auf die Gesamtmasse der Peptide, als Luftporenbildner in hydraulisch härtbaren Baustoffen.

Ein weiterer Gegenstand der vorliegenden Erfindung sind Zusammensetzungen enthaltend mindestens ein Peptid mit mindestens 16 Gew. % Glutamin, bevorzugt mehr als 20 Gew. %, mehr bevorzugt mindestens 25 Gew. %, weiter bevorzugt mehr als 30 Gew. %, insbesondere bevorzugt mehr als 35 Gew. % Glutamin, bezogen auf die Gesamtmasse der Peptide.

Im Umfang dieser Erfindung werden die Begriffe Gluten, Weizenkleber und Weizenprotein synonym verwendet.

Als Bestandteile des Glutens werden im Umfang der Erfindung insbesondere diese verstanden, die anhand ihrer Löslichkeit von Osborne charakterisiert wurden. Die erhaltenen Fraktionen werden als Osborne Fraktionen bezeichnet. Hierzu gehören die wasserlöslichen Weizenproteinfraktionen, die Albumine und Globuline, sowie die nicht-wasserlöslichen Prolamine (Gliadin) und Gluteline (Glutenin) (Belitz, H.-D. und Grosch, W., Food Chemistry, 2nd ed./translation from the fourth German edition by M. Burghagen, 1999, p 637 following). Eine analoge Einteilung erfolgt auch für die Speicherproteine anderer Getreidearten.

Umfasst sind die oben genannten Bestandteile des Glutens bzw. auf anderem Wege erhaltene Bestandteile, unabhängig von ihrer variablen Verteilung in der Gesamtmischung. Die unterschiedlichen massenmäßigen Verteilungen können natürlichen Ursprungs sein oder aber auch auf der erneuten Mischung vorher getrennter oder teilweise abgetrennter Bestandteile beruhen.

Gegebenenfalls können dem Gluten auch weitere Proteine beigemischt sein. Diese können aus anderen Getreidearten stammen, z.B. aus Roggen, Gerste, Hafer, Hirse oder Reis, sowie Leguminosen wie z.B. Erbsen und/oder Soja, weiterhin Mais, Amaranth und/oder Quinoa.

Unter Weizen werden alle Süßgräser der Gattung *Triticum* verstanden, z.B. T. *aestivum, T. antiquorum, T. carthlicum, T. compactum, T. compositum, T. dicoccides, T. dicoccon, T. durum T. estivum, T. flaksbergeri, T. hybernum, T. ispahanicum, T. kiharae, T. macha, T. orientale, T. persicum, T. polonicum, T. pyramidale, T. sativum, T. spelta, T. sphaerococcum, T. timopheevii, T. turanicum, T. trugidum, T. urartu, T. vulgare, T. vulgaris, T. zhukovskyi,* oder *T. monococcum.* Weiterhin sind auch *Triticum x dimococcum, Triticum x fungicidum, Triticum* x *soveticum* und *Triticum x timococcum* umfasst. Die aufgeführten Arten können auch in Unterarten und/oder Varietäten wie z.B. *T. aestivum* ssp. *spelta* unterschieden werden. Im deutschen Sprachraum sind auch andere Bezeichnungen für Weizen im Sinne der Erfindung bekannt wie z.B. Dinkel, Spelz, Schwabenkorn, Franckenkorn, Weichweizen, Emmer, Einkorn oder Hartweizen. Gegebenfalls kann es sich hierbei auch um unterschiedliche Sorten oder spezielle Züchtungen von Süßgräsern der Gattung *Triticum* handeln. Alle diese Bezeichnungen werden unter dem Begriff Weizen im Umfang dieser Erfindung beansprucht.

Unter Mais werden alle Süßgräser der Gattung Zea verstanden, z.B. Z. *mays, Z. altissima, Z. americana, Z. erythrolepis, Z. hirta, Z. mais, Z. maiz, Z. saccharata, Z. segetalis, Z. vulgaris.* Synonyma des Gattungsbegriffes sind *Mays* und *Mayzea*, die synonymen Arten sind z.B. *Mays americana, Mays zea, Mayzea cerealis.* Die aufgeführten Arten können auch in Unterarten und/oder Varietäten wie z.B. Z. *mays* ssp *mays, Z. mays* var. *saccharata* unterschieden werden. Im deutschen Sprachraum sind auch andere Bezeichnungen für Mais im Sinne der Erfindung bekannt wie z.B. Hartmais, Zahnmais, Puffmais (popcorn), Zuckermais (sweet corn), Stärkemais (flour corn), Wachsmais (waxy corn), Spezmais (pod corn). Alle diese Bezeichnungen werden unter dem Begriff Mais im Umfang dieser Erfindung beansprucht.

Unter Amaranth (Amarant) und Quinoa werden die Fuchsschwanzgewächse (*Amaranthaceae*) der Gattungen *Amaranthus* und *Chenopodium* verstanden. Die Familien *Amaranthaceae* und *Chenopodiaceae* wurden ursprünglich aufgrund morphologischer Merkmale unterschiedlicher Familien zugeordnet. Neuere molekularbiologische Untersuchung zeigen, dass die nahe Verwandschaft die Zuordnung in eine Familie unter dem Namen *Amaranthaceae* rechtfertigt. Fogende Arten sind beispielhaft genannt: *Chenopodium quinoa, C. album* ssp *quinoa* (Willd.) Kuntze, *C. album* var *quinoa* (Willd.) Kuntze, *C. canihua* O.F.Cook, *C.* ccoyto Toro Torricio, *C. cchuchi-huila* Toto Torrico, *C. chilense* Pers., *C. guinoa* Krock. *C. hircinum* (Willd.) Aellen, *C. nuttalliae* Saff.; Synonyma der Gattung *Chenopodium L.* sind z.B. *Ambrina* Spach, *Meiomeria* Standl.und *Morocarpus* Boehm, *Amaranthus caudatus, A. mantegazzianus* Pass., *A. maximus* Mill., *A. edulis* Speg., *A. caudatus* ssp *mantagazzianus;* Synonyma der Gattung *Amaranthus* L. sind z.B. *Acanthochiton* Torr., *Acnida L., Amblogyna* Raf., *Euxolus* Raf., *Goerziella* Urb., *Mengea* Schauer, *Montelia* A. Gray, *Sarratia* Moq., Inkaweizen (Inca-wheat, lovelies-bleeding). Alle diese Bezeichnungen werden unter den Begriffen Amaranth und Quinoa im Umfang dieser Erfindung beansprucht.

Gegebenenfalls können Arten und Sorten unterschiedliche Polyploidie also eine erhöhte Anzahl (als normal wird diploid angesehen) der Chromosomensätze aufweisen z.B. triploid, tetraploid hexaploid, oktoploid, dekaploid oder dodecaploid. Gegebenenfalls können die enthaltenen Chromosomensätze von einer Art sein (autoploid) sein. Sie können aber auch aus unterschiedlichen Spezies stammen (alloploid), so sind z.B. auch allotetraploide Chromosomensätze und deren Analoga möglich. Gegebenfalls muss sich die Polyploidie nicht auf den vollständigen Chromosomensatz erstrecken (aneuploid).

Unter "glutaminreiche Peptide" und "glutaminreiche Proteine" werden im Umfang der vorliegenden Erfindung Peptide bzw. Proteine verstanden, die mindestens 16 Gew. % Glutamin, bevorzugt mehr als 20 Gew. %, mehr bevorzugt mindestens 25 Gew. %, weiter bevorzugt mehr als 30 Gew. %, insbesondere bevorzugt mehr als 35 Gew. % Glutamin enthalten, bezogen auf die Gesamtmasse der Peptide bzw. Proteine. Im Umfang dieser Erfindung wird unter "Peptiden" eine Aminosäuresequenz mit einer Kettenlänge von mindestens 2 Aminosäuren, bevorzugt mindestens 5 Aminosäuren, mehr bevorzugt mindestens 10, weiter mehr bevorzugt mindestens 20 Aminosäuren verstanden. Die maximale Zahl von Aminosäuren kann bis zu 200 betragen, bevorzugt bis zu 100. Die Sequenz kann aus natürlichen oder künstlichen Aminosäuren aufgebaut sein. Die Peptide können synthetischer oder teilsynthetischer Natur sein oder auch als Naturstoff aus einem Lebewesen der Biosphäre oder einer anderen Quelle isoliert worden sein.

Die glutaminreichen Proteine können aus unterschiedlichen Quellen stammen. Sie können natürlichen Ursprungs wie auch synthetischer bzw. teilsynthetischer Natur sein. Gegebenenfalls können den glutaminreichen Proteinen weitere nicht glutaminreiche Proteine beigemischt werde. Diese beigemischten Proteine können ebenfalls aus unterschiedliche Quellen stammen; natürlichen Ursprungs wie auch synthetischer bzw. teilsynthetischer Natur sein. Die beigemischten Proteine können auch aus derselben Quelle stammen wie die glutaminreichen Proteine. Bevorzugt sind mindestens 70 Gew.-% des zu hydrolysierenden Proteins bezogen auf die Gesamtmenge Protein glutaminreich. Besonders bevorzugt ist der Glutamingehalt der Gesamtmenge an Protein "glutaminreich" wie oben definiert, also mit einem Glutamingehalt von mindestens 16 Gew. % Glutamin bezogen auf die Gesamtmasse der Proteine.

Technische Proteine enthalten weitere Zusätze. Der Proteingehalt ist damit meist nicht 100% der Gesamtmasse. Meist ist der Proteingehalt über eine Stickstoffbestimmung ermittelt worden, so ist z.B. der Proteingehalt von Produkten der Firma Syral mit Hilfe der Methode nach Kjeldahl (ISO 3188) bestimmt worden.

Gegebenenfalls können die glutaminreichen Proteine Zusätze enthalten, wie z.B. Metallsalze, Konservierungsstoffe etc.

Bevorzugt ist die erfindungsgemäße Verwendung glutaminreicher Hydrolysate glutaminreicher Proteine. Besonders bevorzugt ist die enzymatische Hydrolyse glutaminreicher Proteine. Weiter mehr bevorzugt ist die erfindungsgemäße Verwendung von glutaminreichen Peptiden oder Peptidmischungen, die aus enzymatisch hydrolysiertem Protein mit mindestens 16 Gew. % Glutamin, bevorzugt mehr als 20 Gew. %, mehr bevorzugt mehr als 30 Gew. %, insbesondere bevorzugt mehr als 35 Gew. % Glutamin, bezogen auf die Gesamtmasse der Peptide, gewonnen wurden.

Besonders bevorzugt ist die erfindungsgemäße Verwendung von glutaminreichen Peptiden und/oder Peptidmischungen gewonnen aus Weizenprotein, mehr bevorzugt durch Hydrolyse von Weizenprotein und insbesondere bevorzugt durch enzymatische Hydrolyse von Weizenprotein.

Weiterhin vorteilhaft ist die erfindungsgemäße Verwendung von Proteinhydrolysaten mit einer Molekulargewichtsverteilung zwischen 203 und 100000 g/mol, bevorzugt zwischen 500 und 50000 g/mol und insbesondere bevorzugt 1000 bis 20000 g/mol.

Bevorzugt ist die erfindungsgemäße Verwendung von Proteinhydrolysaten mit einer Molekulargewichtsverteilung zwischen 203 und 100000 g/mol mit einem Glutamingehalt von mindestens 16 Gew. % bezogen auf die Gesamtmasse des Hydrosylates. Besonders bevorzugt sind enzymatische Weizenproteinhydrolysate mit einer Molekulargewichtsverteilung zwischen 203 und 100000 g/mol. Insbesondere bevorzugt sind enzymatische Weizenproteinhydrolysate mit einer Molekulargewichtsverteilung zwischen 203 und 1 00000 g/mol mit einem Glutamingehalt von mindestens 16 Gew. % bezogen auf die Gesamtmasse des Hydrosylates.

Bevorzugt ist die erfindungsgemäße Verwendung von glutaminreichen Peptiden oder Peptidmischungen mit einem Massenanteil von mehr 70 % an glutaminreichen Peptiden bezogen auf die Gesamtpeptidmasse, deren Molekulargewicht kleiner als 14000 g/mol ist.

Weiterhin bevorzugt ist die erfindungsgemäße Verwendung von Proteinhydrolysaten, die unter Verwendung von Enzymen, bevorzugt von Proteasen, mehr bevorzugt Endoproteasen und insbesondere bevorzugt Endoproteasen, die unter geeigneten Reaktionsbedingungen keine bzw. eine geringe Glutaminhydrolase-Nebenaktivität aufweisen, hergestellt wurden. Bevorzugt werden kommerziell verfügbare Endoproteasen technischer Qualität eingesetzt, wie sie z.B. in der Waschmittel und Lebensmittelindustrie zum Einsatz kommen (z.B. Subtilisin Carlsberg, α-Chymotrypsin, Trypsin, Thermolysin, Bromelain, Papain. Beispiele für kommerzielle Präparate sind z.B. Alcalase® 2.4 L FG und Neutrase® 0.8 L der Firma Novozymes).

Glutaminhydrolasen und Transglutaminasen katalysieren die Hydrolyse der Seitenkette des Glutamins zur Glutaminsäure. Unter Glutaminhydrolase-Nebenaktivität wird die Aktivität von beliebigen Enzymen verstanden, die die genannte Seitenkettenhydrolyse katalysieren. Derartige Enzyme sind im Sinne der Erfindung ungeeignete Enzyme.

Die erfindungsgemäßen Hydrolysate der glutaminreichen Proteine sind bevorzugt aus den Proteinen des Weizens, Mais', Amaranths und/oder Quinoas gewonnen worden, mehr bevorzugt aus den glutaminreichen Proteinen des Weizens und/oder Mais'.

Die erfindungsgemäßen Hydrolysate der glutaminreichen Proteine wie auch die nicht erfindungsgemäßen Hydrolysate der glutaminreichen Proteine und bevorzugt der Proteine des Weizens, Mais', Amaranths und/oder Quinoas können sowohl als teilsynthetische als auch als natürliche Peptide aufgefasst werden.

Sofern im Umfang dieser Erfindung auf Naturstoffe Bezug genommen wird, z.B. Glutamin, sind grundsätzlich alle Isomeren damit gemeint, bevorzugt sind die jeweils in der Natur vorkommenden Isomere, im hier genannten Falle also das L-Glutamin. Zur Definition von Naturstoffen wird auf den Umfang des "Dictionary of Natural Products", Chapman and Hall/CRC Press, Taylor and Francis Group, z.B. in der online Ausführung von 2011: http://dnp.chemnetbase.com/ verwiesen.

Eine weitere erfindungsgemäße Verwendung der glutaminreichen Proteine, Peptide und/oder Peptidmischungen ist die Herstellung von Zusammensetzungen enthaltend die glutaminreichen Proteine, Peptide und/oder Peptidmischungen.

In der erfindungsgemäßen Zusammensetzung beträgt der Massenanteil von glutaminreichen Peptiden bezogen auf die Trockenmörtelmasse vorzugsweise von 0,001 bis 10%, bevorzugt von 0,01 bis 2% und besonders bevorzugt von 0,05 bis 0,5%.

Die erfindungsgemäßen Zusammensetzungen können einen oder mehrere weitere Zusätze aufweisen. Bevorzugte Zusätze sind z.B. Lösungsmittel und Bindemittel. Als Lösungsmittel kann die erfindungsgemäße Zusammensetzung insbesondere Wasser oder ein- oder mehrwertige monomere Alkohole aufweisen. Beispiele für einwertige Alkohole sind Ethanol, Propanol, Isopropanol und Butanol. Beispiele für mehrwertige Alkohole sind Ethylenglykol, Propylenglykol, Butylenglykol, Hexylenglykol. Beispiele für ein- oder mehrwertige oligomere oder polymere Alkohole sind Butyldiglykol, Dipropylenglykol, Polyethylenglykol oder Polypropylenglykol. Vorzugsweise weist die erfindungsgemäße Zusammensetzung so viel Lösungsmittel auf, dass das Massenverhältnis von Lösungsmittel zu glutaminreichen Peptiden von 0,1 zu 1 bis 100 zu 1, bevorzugt von 0,2 zu 1 bis 20 zu 1 und besonders bevorzugt von 0,3 zu 1 bis 10 zu 1 beträgt, bezogen auf die Gesamtmasse der Mischung aus Lösungsmittel und Peptiden.

Weiterhin vorteilhaft sind die erfindungsgemäßen Zusammensetzungen der vorliegenden Erfindung zur Herstellung von Baustoffmassen, bevorzugt von hydraulisch härtbaren Baustoffmassen.

Unter "hydraulisch härtbaren" Baustoffen werden bindemittelhaltige Baustoffe verstanden, die unter Zugabe von Wasser und/oder Luft härten. Das Wasser kann hierbei in flüssiger Form zugegeben werden oder gegebenenfalls aus der Umgebung stammen, z.B. Erdfeuchte, Luftfeuchte oder auch Dampf. Im Umfang dieser Erfindung werden unter hydraulisch härtbaren Baustoffen z.B. Betone, Mörtel und Gipse verstanden, die als hydraulische Komponenten z.B. Zement oder kalziumsulfatbasierte Verbindungen, wie beispielsweise Anhydrit, enthalten.

Die erfindungsgemäßen Zusammensetzungen können neben glutaminreichen Peptiden und/oder Peptidmischungen einen oder mehrere Zusatzstoffe ausgewählt aus Fließmitteln, Bindemitteln, Verzögerern, Erstarrungsbeschleunigern, Antischrumpfadditive, Lösungsmitteln, Konservierungsmitteln, Pigmenten, Frostschutzmitteln, Polymeren, Additiven zur inneren Nachbehandlung, Verdickungsmitteln, Hydrophobierungsmitteln und/oder Fließmitteln aufweisen.

Die erfindungsgemäßen Zusammensetzungen können nach ihrer Formulierung fest oder flüssig sein. Die Zugabe flüssiger Zusätze bedeutet nicht, dass die entstehenden Zusammensetzungen flüssig sind. Feste Zusammensetzungen sind z.B. pulverförmig, flüssige Zusammensetzungen sind fließfähig bei Anwendungstemperaturen. Gegebenenfalls wird die Fließfähigkeit unter Anwendung mechanischer Kraft hergestellt bzw. erhöht. Unter mechanischer Kraft wird z.B. die Wirkung von Rüttlern oder auch Ultraschall verstanden. Die Anwendungstemperauten sind auch bei Verwendung von Wasser als Lösungsmittel nicht auf den Temperaturbereich oberhalb von 0°C beschränkt.

Die erfindungsgemäße Zusammensetzung kann als Bindemittel z. B. alle in der Baubranche bekannten Bindemittel aufweisen. Die erfindungsgemäße Zusammensetzung kann eines oder mehrere dieser Bindemittel aufweisen. Bevorzugte Bindemittel sind ausgewählt aus Zement und Calciumsulfat (oder dessen Kristallwasser aufweisende Modifikationen) aufweisenden Bindemitteln, wie z. B. Gips. Bevorzugte Bindemittel sind Zement oder Gips, besonders bevorzugt Zement.

Als Zement kann jeder bekannte Zement verwendet werden. Vorzugsweise wird ein Zement eingesetzt, der zumindest ein Calciumsilicat, -aluminat und/oder -ferrit enthält. Bevorzugt werden Portlandzement (CEM I), Portlandkompositzement (CEM II), Hochofenzement (CEM III), Puzzolanzement (CEM IV) und Kompositzement (CEM V) oder Tonerdeschmelzzement eingesetzt, wie in der Literatur beschrieben (Zement, Grundlagen der Herstellung und Verwendung, Verlag Bau+Technik, 2000).

Die Zusammensetzung weist vorzugsweise als weiteren Zuschlagstoff Sand auf. Der Sand weist vorzugsweise eine maximale Korngröße von 4 mm auf. Die Korngröße kann durch einfache Siebung bestimmt werden. Neben Sand kann die erfindungsgemäße Zusammensetzung auch Kies aufweisen. Der verwendete Kies weist vorzugsweise eine minimale Korngröße von größer 4 mm auf.

Weitere geeignete Zuschlagstoffe, die in den erfindungsgemäßen Zusammensetzungen enthalten sein können, können z. B. dem Römpp Chemielexikon, Georg Thieme Verlag, 2011 unter dem Stichwort Betonzuschlag (Dokumentkennung RD-02-01140) entnommen werden.

Weitere Bestandteile der erfindungsgemäßen Zusammensetzugen können sein Verzögerer wie z.B. Gluconate, Tartrate oder Phosphonate, Erstarrungs- und / oder Erhärtungsbeschleuniger wie z.B. Lithiumcarbonat, Antischrumpfadditive wie z.B. ein- oder mehrwertige Alkohole, Konservierungsmittel, Pigmente wie z.B. Titandioxid oder organische Pigmente, Frostschutzmittel wie z.B. Chloride, Polymere wie z.B. Acrylate, Additive zur inneren Nachbehandlung, organische und anorganische Verdickungsmittel wie z.B. Stärke oder Bentonit, Hydrophobierungsmittel wie z.B. Silane, Siloxane, Siliconöle oder Salze von Fettsäuren wie auch Fließmittel.

Die Herstellung der erfindungsgemäßen Zusammensetzungen kann durch einfaches Abmischen, vorzugsweise unter Rühren erfolgen. Die Herstellung kann im Batchverfahren oder kontinuierlich erfolgen. Vorzugsweise erfolgt die Herstellung der Zusammensetzung bei einer Temperatur von 0°C bis 130°C, bevorzugt 5 °C bis 60 °C, besonders bevorzugt bei der jeweiligen Außentemperatur am Herstellungsstandort.

Die erfindungsgemäßen Zusammensetzungen können z. B. Baustoffmischungen, vorzugsweise eine Mörtel- oder Betonmischungen sein. Dies ist insbesondere dann der Fall, wenn die erfindungsgemäßen Zusammensetzungen Zement und/oder Calciumsulfat (oder dessen Kristallwasser aufweisende Modifikationen) aufweisende Bindemittel sowie ggf. einen oder mehrere Zuschlagstoffe enthalten.

In der erfindungsgemäßen Zusammensetzung beträgt der Massenanteil von glutaminreichen Peptiden bezogen auf die Trockenmörtelmasse vorzugsweise von 0,001 bis 10%, bevorzugt von 0,01 bis 2% und besonders bevorzugt von 0,05 bis 0,5%.

Die erfindungsgemäßen Zusammensetzungen können als oder zur Herstellung von Baustoffmischungen oder Baustoffen, insbesondere Mörtelmischungen oder Betonmischungen verwendet werden. Die Baustoffmischungen können zur Herstellung von Mörteln oder Beton verwendet werden. Gegenstand der vorliegenden Erfindung sind deshalb auch Baustoffe, insbesondere Fertigteile, wie z. B. Gasbetonfertigteile oder Gipskartonplatten zu deren Herstellung eine erfindungsgemäße Zusammensetzung verwendet wurde bzw. entsprechende Baustoffe bzw. Gasbeton, die die erfindungsgemäßen Zusammensetzungen aufweisen.

Die erfindungsgemäßen Zusammensetzungen sowie deren Verwendungen werden nachfolgend beispielhaft beschrieben, ohne dass die Erfindung auf diese beispielhaften Ausführungsformen beschränkt sein soll. Sind nachfolgend Bereiche, allgemeine Formeln oder Verbindungsklassen angegeben, so sollen diese nicht nur die entsprechenden Bereiche oder Gruppen von Verbindungen umfassen, die explizit erwähnt sind, sondern auch alle Teilbereiche und Teilgruppen von Verbindungen, die durch Herausnahme von einzelnen Werten (Bereichen) oder Verbindungen erhalten werden können. Werden im Rahmen der vorliegenden Beschreibung Dokumente zitiert, so soll deren Inhalt, insbesondere bezüglich der in Bezug genommenen Sachverhalte vollständig zum Offenbarungsgehalt der vorliegenden Erfindung gehören. Wenn im nachfolgenden Mittelwerte angegeben sind, so handelt es sich, wenn nicht anders angegeben, um zahlengemittelte Mittelwerte. Bei Prozentangaben handelt es sich, wenn nicht anders angegeben um Angaben in Gewichtsprozent. Werden nachfolgend Messwerte angegeben so wurden diese, wenn nicht anders angegeben, bei einer Temperatur von 25 °C und einem Druck von 1013 mbar bestimmt.

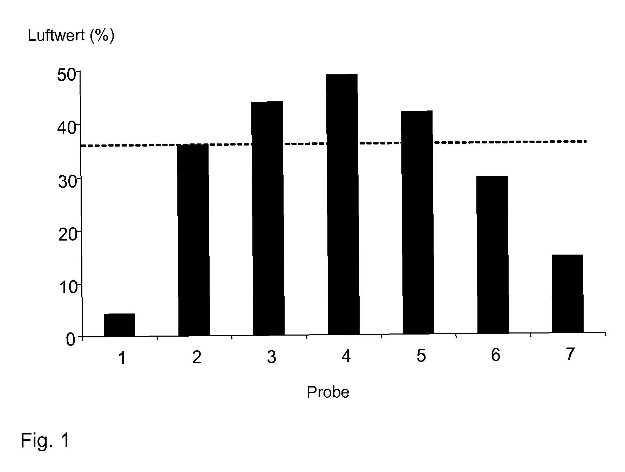

Figur 1 zeigt den Luftgehalt verschiedener Proben gemäß den Beispielen. Alle Proben sind Zubereitungen gemäß Beispiel 3a, Probe 1 ist der Blindwert, Probe 2 enthält nicht hydrolysiertes Gluten, die Proben 3 und 4 enthalten enzymatisch hydrolysiertes Gluten gemäß Beispiel 1a, die Proben 5, 6 und 7 enthalten sauer hydrolysiertes Gluten gemäß Beispiel 1 b. Der Luftgehalt ist gemäß Beispiel 3b bestimmt worden.

### Beispiele:

### Allgemeine Methoden und Materialien

### SDS-PAGE:

Die Polyacrylamid-Gelelektrophorese wurde in Gegenwart von SDS unter nichtreduzierenden Bedingungen durchgeführt. Es wurde ein Broad-range Gel der Firma Bio-Rad und der zugehörige Marker (6,5 - 200 kDa) verwendet und die Probenvorbereitung sowie die Elektrophorese nach üblichen Protokollen durchgeführt.

### Beispiel 1: Hydrolyse von Weizenprotein

### Beispiel 1a: Enzymatische Hydrolyse von Gluten (erfindungsgemäß):

Eine 10 Gew.-% Suspension eines kommerziell verfügbaren Weizenklebers (Amygluten 110, Firma Syral) in Wasser wurde bei einer Temperatur von 50°C und pH = 7 durch Zugabe von 0,1 Gew.-% (bezogen auf das Protein) einer kommerziell verfügbareren Protease (Neutrase® 0.8 L der Firma Novozymes) über mehrere Stunden hydroylsiert. Der pH-Wert wurde durch wiederholte Zugabe von 10 Gew. % NaOH (Lösung in Wasser) konstant gehalten.
Die Hydrolyse wurde durch Inaktivierung der Enzyme durch Erhitzen auf 80 °C für 10 Minuten beendet. Die Proben wurden durch Zugabe von HCl als 10 Gew.-% Lösung in Wasser neutralisiert und schließlich gefriergetrockent. Das so erhaltene Pulver wurde für die anwendungstechnischen Untersuchungen eingesetzt. Der Hydrolysegrad wurde mittels oPA-Assay und der Glutamingehalt mittels Ammoniakassay analysiert.

### Beispiel 1b: Saure Hydrolyse von Gluten (nicht erfindungsgemäß):

Ein kommerziell verfügbarer Weizenkleber (Amygluten 110, Firma Syral) wurde bei einer Temperatur von 95 °C unter Zusatz von HCl oder alternativ H₃PO₄ bei einem pH Wert von 1 (HCl) oder 2 (H₃PO₄) über mehrere Stunden hydrolysiert.
Die Hydrolyse wurde durch Neutralisation mit 10 Gew. % NaOH (Lösung in Wasser) beendet. Die Proben wurden gefriergetrocknet. Das so erhaltene Pulver wurde für die anwendungstechnischen Untersuchungen eingesetzt. Der Hydrolysegrad wurde mittels oPA-Assay und der Glutamingehalt mittels Ammoniakassay analysiert.

### Beispiel 2: Charakterisierung der Hydrolysate

### 2a Bestimmung des Hydrolysegrads:

Der Hydrolysegrad wurde mittels einer modifizierten ortho-Phthalaldehyd (oPA)-Methode bestimmt, die von Church et al. beschrieben wurde (Church FC, Swaisgood HE, Porter DH, Catignani GL. 1983. Spectrophotometric assay using o-phthaldialdehyde for determination of proteolysis in milk and isolated milk proteins. J Dairy Sci 66:1219-1227). Proben der Hydrolysate wurden in einer 2 Gew.-% SDS Lösung (hergestellt aus einer 10 Gew.-% Lösung, Sigma-Aldrich, L4522) durch Erhitzen solubilisiert und anschließend 1:100 in Wasser verdünnt. 100 µl der verdünnten Probe wurden mit 1 ml eines kommerziell erhältlichen oPA-Reagenz (Sigma-Aldrich, Best Nr. P0532) gemischt und die Absorption bei 340 nm nach genau 2 Minuten gemessen. Als Kontrolle wurde derselbe Versuch mit Wasser anstelle von Probe durchgeführt. Dieser Blindwert wurde von den Probenmesswerten substrhiert. Eine Kalibriergerade wurde mit Serin erstellt und die Anzahl an freigesetzten Aminogruppen in den Hydrolysaten wurde anhand dieser Kalibriergerade berechnet. Da auch aus der Glutaminhydrolyse freigesetzter Ammoniak mit der oPA-Methode erfasst wird, wurde die mittels enzymatischem Ammoniakassay ermittelte Ammoniakkonzentration bei der Berechnung der freigesetzten Aminogruppen substrahiert.

### 2b Bestimmung des Glutamingehalts:

Der Glutamingehalt des nicht hydrolysierten Weizenklebers wurde bestimmt, indem das Protein über 48 Stunden vollständig sauer hydrolysiert wurde (unter den gleichen Bedingungen wie in Beispiel 1 b beschrieben). Neben der Kompletthydrolyse des Polypeptids zu Aminosäuren werden hierbei auch die Glutaminseitenketten vollständig zu Säureresten unter Bildung von Glutaminsäure und Ammoniak/Ammoniumionen hydrolysiert. Der freigesetzte Ammoniak wurde mittels eines kommerziell verfügbaren enzymatischen Tests zur Ammoniakmessung bestimmt (Boehringer Mannheim/R-Biopharm, Best. Nr. 11 112 732 035). Der Test beruht auf der photometrischen Detektion des NADH-Verbrauchs bei der Glutamat-Dehydrogenase katalysierten Umsetzung des Ammoniaks mit α-Ketoglutarat zu Glutamat. Über die freigesetzte Menge an Ammoniak konnte der Glutamingehalt des Weizenklebers bestimmt werden. Er betrug 35 ± 2 Gew.-% bezogen auf die eingesetzte Menge an Weizenkleber. Auf gleiche Weise wurde der während der enzymatischen und der sauren Teilhydrolyse (vgl. Bsp. 1a und 1 b) freigesetzte Ammoniak bestimmt. Hierüber konnte der durch die Hydrolyse der Glutaminseitenketten freigesetzte Gesamtanteil an freier und noch polymer gebundener Glutaminsäure im Hydrolysat bestimmt werden. Über die Differenzbildung zum Glutamingehalt des Ausgangsmaterials, konnte der Anteil an Glutaminresten in den Teilhydrolysaten bestimmt werden. Der Glutamingehalt veränderte sich durch die enzymatische Hydrolyse nicht (35 ± 2 Gew.-%), während er durch die saure Hydrolyse nach 12 Stunden auf ca. 12 Gew.-% zurückging.

### Beispiel 3: Verwendungsbeispiele:

### Beispiel 3a: Herstellung einer Mörtelmasse zur Bestimmung von Luftgehalt und Ausbreitmaß in Anlehnung an DIN 18555 T2:

In den Rührtopf eines Hobart-Mischers wurden die pulverförmigen Komponenten der Mörtelmischung eingewogen. Der Topf wurde am Hobart-Mischer befestigt und gesichert. Zur Staubreduzierung wurde ein feuchtes Fliestuch auf das Schutzgitter gelegt. Die Trockenmischung wurde anschließend zwei Minuten lang bei Rührstufe 1 gemischt. Die flüssigen Additive wurden zum Anmachwasser gegeben und diese Mischung bei gleicher Rührstufe (Stufe 1) zur Trockenmischung zugegeben und anschließend zwei Minuten nachgerührt.

Um einen höheren Lufteintrag zu erreichen wurde anschließend folgendermaßen vorgegangen: Der Rührmotor wurde zunächst ausgestellt. Evtl. entstandener Bodensatz (sofern vorhanden) wurde per Hand aufgerührt und die Rührstufe anschließend auf Stufe 2 erhöht. Der Rührer wurde wieder angestellt und die Mischung zwei Minuten lang durchmischt.

### Beispiel 3b: Bestimmung des prozentualen Luftgehaltes:

Ein Teil der fertigen Mörtelmasse aus Beispiel 3a wurde in den Behälter des Luftporenmessgerätes (Typ Testing, Seriennummer 2558, Hersteller tecnotest, IT) gegeben und glattgestrichen. Dann wurde der obere Teil des Gerätes aufgesetzt, das Gerät verschlossen und mit destilliertem Wasser befüllt. Dann wurde Luft in den oberen Teil des Behälters gepumpt und der Druck so eingestellt, dass der Zeiger der Skala auf dem Null-Strich steht. Das System wurde über ein Ventil entspannt und der Luftgehalt (in Volumen-%) auf der Anzeige abgelesen.

Die erfindungsgemäßen Zusammensetzungen (Proben 3, 4 und 5, Tab. 1 und Fig. 1) weisen einen höheren Lufteintrag auf als Zusammensetzungen, die nicht hydrolysiertes Gluten (Probe 2, Tab. 1 und Fig. 1) enthalten und weisen ebenfalls höhere Luftwerte auf, als die nichterfindungsgemäßen Zusammensetzungen (Proben 6 und 7, Tab. 1 und Fig. 1).

**Tabelle 1: Glutamingehalt gemäß Beispiel 2b, Hydrolysegrad gemäß Beispiel 2a, Luftwerte gemäß Beispiel 3**

| Probe | Beschreibung | Glutamingehalt [%] | Hydrolysegrad [%] | Luftwert [%] |
|---|---|---|---|---|
| 1 | ohne Additiv | | | 4 |
| 2 | Gluten | 35 | 0 | 36 |
| 3 | enzym. hydrolysiert, 6h | 35 | 6,4 | 44 |
| 4 | enzym hydrolysiert, 24h | 35 | 7,0 | 49 |
| 5 | sauer hydrolysiert, 5h | 18 | 4,4 | 42 |
| 6 | sauer hydrolysiert, 12 h | 13 | 4,5 | 30 |
| 7 | sauer hydrolysiert, 48 h | 12 | 6,1 | 15 |

## Patentansprüche

1. Verwendung von glutaminreichen Peptiden oder Peptidmischungen als Luftporenbildner in hydraulisch härtbaren Baustoffen **dadurch gekennzeichnet, dass** das Peptid mindestens 16 Gew. % an Glutamin, bezogen auf die Gesamtmasse der Peptide, enthält.

2. Verwendung nach Anspruch 1 **dadurch gekennzeichnet, dass** die glutaminreichen Peptide oder Peptidmischungen durch enzymatische Hydrolyse aus Proteinen mit einem hohen Anteil an Glutamin gewonnen wurden.

3. Verwendung nach Anspruch 1 oder 2 **dadurch gekennzeichnet, dass** die glutaminreichen Peptide oder Peptidmischungen durch enzymatische Hydrolyse aus Pflanzenproteinen mit einem hohen Anteil an Glutaminresten gewonnen wurden.

4. Verwendung nach einem der Ansprüche 1 bis 3 **dadurch gekennzeichnet, dass** die glutaminreichen Peptide oder Peptidmischungen durch enzymatische Hydrolyse aus Weizenprotein, Maisprotein, Amaranthprotein und/oder Quinoaprotein gewonnen wurden.

5. Verwendung nach einem der Ansprüche 1 bis 4 **dadurch gekennzeichnet, dass** die glutaminreichen Peptide oder Peptidmischungen durch enzymatische Hydrolyse aus Weizenprotein gewonnen wurden.

6. Verwendung nach einem der Ansprüche 1 bis 5 **dadurch gekennzeichnet, dass** die glutaminreichen Peptide oder Peptidmischungen eine Molekulargewichtsverteilung zwischen 203 und 100000 g/mol, bevorzugt zwischen 500 und 50000 g/mol und insbesondere bevorzugt 1000 bis 20000 g/mol.

7. Zusammensetzungen enthaltend mindestens ein Peptid, das mindestens 16 Gew. % an Glutamin bezogen auf die Gesamtmasse des Peptids enthält.

8. Zusammensetzungen nach Anspruch 7 **dadurch gekennzeichnet dass** die Zusammensetzungen zur Herstellung von Baustoffmassen verwendet werden.

9. Zusammensetzungen nach Anspruch 7 oder 8 **dadurch gekennzeichnet, dass** die Zusammensetzungen neben glutaminreichen Peptiden einen oder mehrere Zusatzstoffe ausgewählt aus Fließmitteln, Bindemitteln, Verzögerern, Erstarrungsbeschleunigern, Antischrumpfadditive, Lösungsmitteln, Konservierungsmitteln, Pigmenten, Frostschutzmitteln, Polymere, Additive zur inneren Nachbehandlung, Verdickungsmittel, Hydrophobierungsmittel und/oder Fließmittel aufweisen.

10. Zusammensetzungen nach einem der Ansprüche 7 bis 9 **dadurch gekennzeichnet, dass** die Zusammensetzungen flüssige Formulierungsmittel enthalten.

11. Verwendung von Zusammensetzungen nach einem der Ansprüche 7 bis 10 **dadurch gekennzeichnet, dass** die Zusammensetzungen als Luftporenbildner in hydraulisch härtbaren Baustoffen dienen.
